# EUROPEAN PATENT APPLICATION

(11) **EP 4 418 621 A1**
(43) Date of publication of application: **21.08.2024**
(21) Application number: 21963583.6
(22) Date of filing: 11.11.2021
(51) Int. Cl.: H04L 43/00, H04J 14/02

(54) **METHOD AND DEVICE FOR SENDING FAULT ALERT INFORMATION**

(71) Applicant: Huawei Technologies Co., Ltd., Shenzhen, Guangdong 518129 (CN)
(72) Inventor: ZHAO, Chen, Shenzhen, Guangdong 518129 (CN); CHENG, Xiang, Shenzhen, Guangdong 518129 (CN); LE, Huan, Shenzhen, Guangdong 518129 (CN); JIANG, Tao, Shenzhen, Guangdong 518129 (CN)
(74) Representative: Pfenning, Meinig & Partner mbB
(86) International application number: PCT/CN2021/130005
(87) International publication number: WO 2023/082128

(57) **Abstract**

This application discloses a method and an apparatus for sending fault alarm information, which are used in an optical module. The optical module is located in a first apparatus. The method includes: generating fault alarm information, and sending the fault alarm information through a serializer/deserializer SerDes bus. The fault alarm information indicates a fault that occurs in the first apparatus and/or a target communication link, and the target communication link is a link for communication between the first apparatus and another apparatus. According to the solution provided in this application, a speed of sending the fault alarm information by the optical module can be improved, and fast and timely reporting of the fault alarm information can be implemented.

## Description

### TECHNICAL FIELD

This application relates to the field of digital communication and optical communication, and in particular, to a method and an apparatus for sending fault alarm information.

### BACKGROUND

A digital coherent optics (digital coherent optics, DCO) module is a processing module that integrates optical-to-electrical conversion and transmission functions. The DCO module typically includes highly integrated optical coherent receivers and transmitters using tunable lasers. Many elements of the DCO module typically need to be fabricated by advanced technologies such as silicon photonics. The DCO module may be deployed on various communication apparatuses or signal processing apparatuses (such as a switch, a router, and a board), and implement the optical-to-electrical conversion and transmission functions. A digital signal processor (digital signal processor, DSP) chip is integrated into an optical component, and the DCO module may implement digital communication with an apparatus in which the DCO module is located.

After the DCO module is deployed in an apparatus, a fault that occurs in the apparatus may be sensed in time, but the DCO module cannot perform corresponding processing on the sensed fault to eliminate the fault. Therefore, after perceiving the fault that occurs in the apparatus, the DCO module needs to report alarm information for the fault to an upper-layer module or another module that can perform corresponding processing on the fault.

Currently, the DCO module can report fault alarm information through a specific interruption pin. However, a quantity of interruption pins of the DCO module is limited, and there are fewer interruption pins that can be used to transmit the fault alarm information. However, the DCO module can sense more fault types. Therefore, the specific interruption pin of the DCO module may not be able to report a plurality of types of fault alarm information at the same time, and it is difficult to meet a requirement of reporting the fault alarm information fast and timely during actual application.

### SUMMARY

This application provides a method and an apparatus for sending fault alarm information, to improve a speed of sending the fault alarm information by an optical module, and implement fast and timely reporting of the fault alarm information.

According to a first aspect, an embodiment of this application provides a method for sending fault alarm information, which is used in an optical module. The optical module is located in a first apparatus. The method includes: generating fault alarm information, and sending the fault alarm information through a serializer/deserializer SerDes bus. The fault alarm information indicates a fault that occurs in the first apparatus and/or a target communication link, and the target communication link is a link for communication between the first apparatus and another apparatus.

In this method, the SerDes bus is an OTN overhead control channel of the optical module, a transmission rate and transmission bandwidth of the SerDes bus are both large, and a corresponding capacity of information that can be borne is also large. In addition, during actual application, bandwidth occupied by the SerDes bus usually has a large margin. This can meet a resource requirement for sending a plurality of types of fault alarm information at the same time. Therefore, in this method, the optical module sends the fault alarm information through an existing SerDes bus, so that a large bandwidth margin of the SerDes bus can be used to implement fast sending of a plurality of types of fault alarm information at the same time. This improves a speed and efficiency of performing fault alarm by the optical module.

In this method, in a possible design, the sending the fault alarm information through a SerDes bus includes: sending, through the SerDes bus, an optical transport network OTN overhead signal that carries the fault alarm information.

In this method, the fault alarm information is carried in the OTN overhead signal for transmission, and the fault alarm information may be transmitted in a transmission manner of an existing signal. This reduces extra overheads and impact caused by sending the fault alarm information as much as possible.

In a possible design, the OTN overhead signal further includes: overhead information and first identification information; or the overhead information, the first identification information, and second identification information. The overhead information is used to monitor a service signal of a service carried by the first apparatus and/or the target communication link, the first identification information identifies the fault alarm information, and the second identification information identifies the overhead information.

In this method, the fault alarm information is identified by using the first identification information, so that a receiving end of the OTN overhead signal can locate and extract the fault alarm information from the OTN overhead signal more quickly. This accelerates processing of the fault alarm information by the receiving end. Further, the first identification information and the second identification information separately identify the fault alarm information and other information than the fault alarm information, namely, the overhead information, so that the fault alarm information and the other information can be more accurately distinguished, and it is more convenient for the receiving end to separately process the fault alarm information and the other information.

In a possible design, the generating fault alarm information includes: determining the fault that occurs in the first apparatus and/or the target communication link, and generating the fault alarm information based on the determined fault, where a type of the fault alarm information is the same as a type of the determined fault.

In a possible design, the determining the fault that occurs in the first apparatus and/or the target communication link includes:
obtaining a target service classification tree, where the target service classification tree indicates a service level of each target service in a plurality of target services, and an upper-level and lower-level association relationship between target services of different service levels, the plurality of target services are services carried by the first apparatus and the target communication link, and in the target service classification tree, each target service has one upper-level service and/or at least one lower-level service; detecting a faulty service based on the target service classification tree; and determining, based on the faulty service, the fault that occurs in the first apparatus and/or the target communication link.

In the method, the target service classification tree may intuitively reflect service levels of the target services carried by the first apparatus and the target communication link and an upper-level and lower-level association relationship between services. Fault detection may be performed on some target services in a targeted manner based on the service levels of the target services and the upper-level and lower-level association relationship between the services. Therefore, after the target service is classified into levels by using the target service classification tree, it is more convenient to perform the fault detection and subsequent processing on the target service.

In a possible design, the detecting a faulty service based on the target service classification tree includes: selecting, from the target service classification tree, a target service with a highest service level as a to-be-detected service; sequentially detecting, in descending order of service levels, the to-be-detected service and all target services that have a lower-level association relationship with the to-be-detected service; each time a faulty service is detected, saving the faulty service, and stopping detecting all target services that have a lower-level association relationship with the faulty service; and after detection of all the target services that have the lower-level association relationship with the to-be-detected service is completed, selecting, from the target service classification tree, a next target service with a highest service level as a to-be-detected service to continue detection until detection of a last target service with a highest service level is completed.

In the method, the target service indicated by the target service classification tree is detected based on a service level sequence indicated by the target service classification tree, so that an order of the service detection can be improved. In addition, each time a faulty service is detected, detection of a service that has a lower-level association relationship with the service is stopped, so that redundant detection on some target services can be avoided, and a detection speed is improved while detection accuracy is ensured.

In a possible design, when the faulty service is a target service, the fault alarm information includes at least one piece of fault indication information. The at least one piece of fault indication information indicates the target service.

In the method, the fault indication information in the fault alarm information may separately indicate different service faults. Therefore, the fault alarm information may indicate a plurality of different service faults at the same time, and efficiency of sending a fault alarm can be ensured when a large quantity of service faults occur.

According to a second aspect, an embodiment of this application provides an apparatus. The apparatus is used in an optical module, and the optical module is located in a first apparatus. The apparatus includes: a processing unit, configured to generate fault alarm information; and a sending unit, configured to send the fault alarm information through a SerDes bus. The fault alarm information indicates a fault that occurs in the first apparatus and/or a target communication link, and the target communication link is a link for communication between the first apparatus and another apparatus.

In a possible design, when sending the fault alarm information through the SerDes bus, the sending unit is specifically configured to send, through the SerDes bus, an optical transport network OTN overhead signal that carries the fault alarm information.

In a possible design, the OTN overhead signal further includes: overhead information and first identification information; or the overhead information, the first identification information, and second identification information. The overhead information is used to monitor a service signal of a service carried by the first apparatus and/or the target communication link, the first identification information identifies the fault alarm information, and the second identification information identifies the overhead information.

In a possible design, when generating the fault alarm information, the processing unit is specifically configured to determine the fault that occurs in the first apparatus and/or the target communication link, and generate the fault alarm information based on the determined fault, where a type of the fault alarm information is the same as a type of the determined fault.

In a possible design, when determining the fault that occurs in the first apparatus and/or the target communication link, the processing unit is specifically configured to: obtain a target service classification tree, where the target service classification tree indicates a service level of each target service in a plurality of target services and an upper-level and lower-level association relationship between target services of different service levels, the plurality of target services are services carried by the first apparatus and the target communication link, and in the target service classification tree, each target service has one upper-level service and/or at least one lower-level service; detect a faulty service based on the target service classification tree; and determine, based on the faulty service, the fault that occurs in the first apparatus and/or the target communication link.

In a possible design, when detecting the faulty service based on the target service classification tree, the processing unit is specifically configured to: select, from the target service classification tree, a target service with a highest service level as a to-be-detected service; sequentially detect, in descending order of service levels, the to-be-detected service and all target services that have a lower-level association relationship with the to-be-detected service; each time a faulty service is detected, save the faulty service, and stop detecting all target services that have a lower-level association relationship with the faulty service; and after detection of all the target services that have the lower-level association relationship with the to-be-detected service is completed, select, from the target service classification tree, a next target service with a highest service level as a to-be-detected service to continue detection until detection of a last target service with a highest service level is completed.

In a possible design, when the faulty service is a target service, the fault alarm information includes at least one piece of fault indication information. The at least one piece of fault indication information indicates the target service.

According to a third aspect, this application provides a chip, including a transceiver, a memory, and a processor. The transceiver is configured to receive a signal from an apparatus other than the chip, and transmit the signal to the processor, or send a signal from the processor to an apparatus other than the chip. The memory is configured to store a program. The processor is configured to execute the program stored in the memory, to implement the method described in any one of the first aspect or the possible designs of the first aspect.

According to a fourth aspect, this application provides an electronic device, where the electronic device includes the chip according to the third aspect.

According to a fifth aspect, this application provides an electronic device, where the electronic device includes an optical module, and the optical module includes the chip according to the third aspect.

According to a sixth aspect, this application further provides a computer-readable storage medium, where the computer-readable storage medium includes a computer program. When the computer program is run on a computer, the computer is enabled to perform the method described in any one of the first aspect or the possible designs of the first aspect.

According to a seventh aspect, this application provides a computer program product, where the computer program product includes a computer program or instructions. When the computer program or the instructions are run on a computer, the computer is enabled to perform the method described in any one of the first aspect or the possible designs of the first aspect.

For beneficial effects of the second aspect to the seventh aspect, refer to the description of the beneficial effects of the first aspect. Details are not described herein again.

### BRIEF DESCRIPTION OF DRAWINGS

FIG. 1 is a schematic diagram of a process of client-side fiber cut protection;
FIG. 2 is a schematic diagram of a system architecture of a DCO module;
FIG. 3 is a schematic diagram of service flow transmission;
FIG. 4 is a schematic diagram of a system architecture of a board according to an embodiment of this application;
FIG. 5 is a schematic diagram of reporting fault alarm information according to an embodiment of this application;
FIG. 6 is a schematic diagram of a service interruption alarm tree according to an embodiment of this application;
FIG. 7 is a schematic diagram of composition of a data frame of fault alarm information according to an embodiment of this application;
FIG. 8 is a schematic diagram of a data frame of an OTN signal according to an embodiment of this application;
FIG. 9 is a schematic diagram of a data frame of another OTN signal according to an embodiment of this application;
FIG. 10 is a schematic diagram of a data frame of still another OTN signal according to an embodiment of this application;
FIG. 11 is a schematic flowchart of a method for sending fault alarm information according to an embodiment of this application;
FIG. 12 is a schematic diagram of an apparatus according to an embodiment of this application; and
FIG. 13 is a schematic diagram of a structure of an apparatus according to an embodiment of this application.

### DESCRIPTION OF EMBODIMENTS

To make objectives, technical solutions, and advantages of embodiments of this application clearer, the following further describes embodiments of this application in detail with reference to the accompanying drawings. The terms "first" and "second" below in descriptions of embodiments of this application are merely used for a description purpose, and shall not be understood as an indication or implication of relative importance or implicit indication of a quantity of indicated technical features. Therefore, a feature limited by "first" or "second" may explicitly or implicitly include one or more features.

For ease of understanding, descriptions of concepts related to this application are provided as examples for reference, as shown in the following:

(1) An optical transport network (optical transport network, OTN) is a network formed by a series of network units connected by optical fibers, and is a transport network that implements transmission, multiplexing, route selection, management, and monitoring of service signals in an optical domain.

One of the main features of the OTN is network hierarchy. The OTN includes a plurality of network layers, and each network layer is a server layer and a client layer for each other. Signals may be transmitted between different network layers. Each network layer has an overhead, and the overhead may be used to detect signal quality at the network layer.

Currently, according to OTN-related protocols (such as a G.709 protocol), the OTN may be divided into a client signal layer, an optical channel payload unit (OPU), an optical channel data unit (ODU), an optical channel transport unit (OTU), an optical channel layer (OCH), an optical multiplex section layer (OMS), an optical transport section layer (OTS), and the like.

An OTN data frame may be used to carry various service data in the OTN, and can implement management and monitoring of the service data. The OTN data frame may be an optical data unit k (optical data unit k, ODUk), an ODUCn, or a flexible ODU (ODUflex), or the OTN data frame may be an optical transport unit k (optical transport unit k, OTUk), an OTUCn, a flexible OTN (flexible OTN, FlexO), or the like. A difference between an ODU frame and an OTU frame lies in that the OTU frame includes an ODU frame and an OTU overhead. k represents different rate levels. For example, k=1 represents 2.5 Gbps, and k=4 represents 100 Gbps. Cn represents a variable rate, and may be specifically a rate that is a positive integer multiple of 100 Gbps. For example, ODUC4 represents an optical data unit with a transmission rate of 400 Gbps.

The OTN data frame usually includes an overhead area and a payload area. The overhead area is used to carry overhead information of a network layer, for example, a service frame header indication, a path trace identifier (trail trace identifier, TTI), an X-bit interleaved parity BIP-X (X Bit-interleaved parity, BIP-X) check, a backward error indication (backward error indication, BEI), a backward defect indication (backward defect indication, BDI), a status (Status, STAT), a timestamp, a sequence identifier, and a mapping overhead. The payload area is used to carry service data. In some special cases, the OTN data frame may not include a payload area, that is, the OTN data frame is not used to carry service data. In this case, the OTN data frame is referred to as an OTN overhead data frame. OTN overhead information is transmitted between network layers in the form of OTN overhead data frames.

It should be noted that the OTN data frame may also be another frame structure applicable to an optical network, and with development of an OTN technology, a new type of OTN frame may be defined, which is also applicable to this application.

(2) Serializer/deserializer (serializer/deserializer, SerDes) is a mainstream time-division multiplexing (time-division multiplexing, TDM) and peer-to-peer (P2P) serial communication technology. That is, a transmitting end converts a plurality of low-speed parallel signals into high-speed serial signals, and transmits the high-speed serial signals to a receiving end through a transmission medium (such as an optical cable), and the receiving end converts the high-speed serial signals into low-speed parallel signals again. Such a peer-to-peer serial communication technology uses a channel capacity of the transmission medium, reduces quantities of required transmission channels and component pins, improves a signal transmission speed, and greatly reduces communication costs.

It should be understood that, in embodiments of this application, "at least one" means one or more, and "a plurality of" means two or more. The term "and/or" describes an association relationship between associated objects, and indicates that three relationships may exist. For example, A and/or B may indicate the following cases: Only A exists, both A and B exist, and only B exists, where A and B may be singular or plural. The character "/" generally indicates an "or" relationship between the associated objects. "At least one of the following pieces (items)" or a similar expression thereof indicates any combination of these items, including a single item (piece) or any combination of a plurality of items (pieces). For example, at least one of a, b, or c may indicate a, b, c, a and b, a and c, b and c, or a, b, and c, where a, b, and c may be singular or plural.

A 100G form-factor pluggable (centum form-factor pluggable, CFP) protocol defines a package specification for hot-swappable optical modules. It is a new type of high-speed hot-swappable optical module standard that supports two applications of data communication and telecommunication transmission. The DCO module encapsulated based on the CFP protocol may support a transmission speed such as 100 Gbps (100G for short), 400 Gbps (100G for short), or 800 Gbps (800G for short), and can meet a requirement of a wide range of network optical interconnection applications.

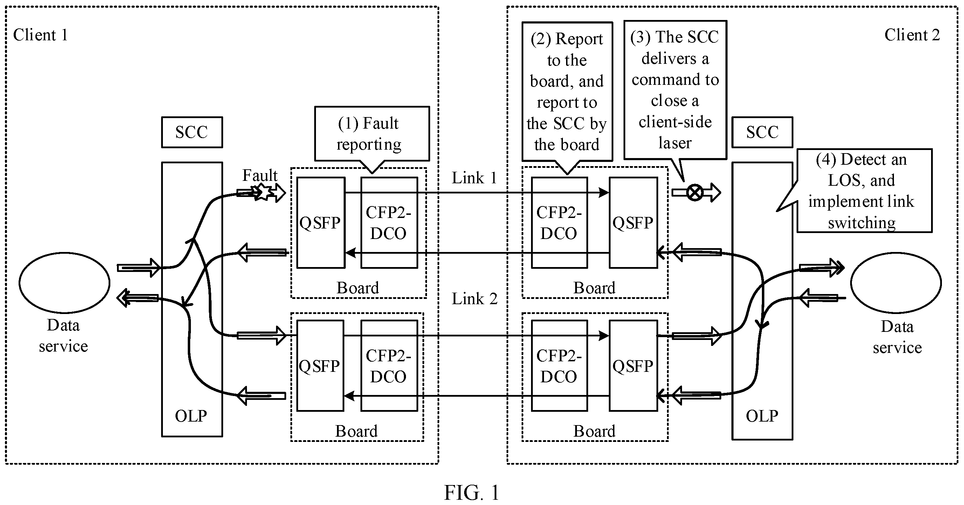

For example, a DCO (CFP2-DCO for short) module based on a second generation CFP protocol may be widely applied to a data center inter-connect (data center inter-connect, DCI) scenario. In a DCI scenario, when a service fault occurs on a client, a service needs to be quickly restored, to maintain normal execution of the service on the client. For example, as shown in FIG. 1, initially, two clients communicate with each other through a link 1. When a fiber cut fault occurs on one of the clients, communication performed by the two clients based on the link 1 is affected. Therefore, a system control communication (system control communication, SCC) board needs to be used to switch communication links of the two clients from the link 1 to a link 2, to ensure normal communication between the two clients. However, the SCC board does not have a fault detection function, but the CFP2-DCO module has the fault detection function. Therefore, the CFP2-DCO module needs to be able to quickly report fault alarms to the SCC board, so that the SCC board can respond to the fault alarms and rectify service faults. The fault alarms need to be reported as quickly as possible to reduce impact on service recovery time.

For example, as shown in FIG. 1, when a service fault occurs on a client 1, a CFP2-DCO module in the client 1 reports the service fault to a client 2 through a link 1, and after receiving the service fault reported by the client 1, a CFP2-DCO module in the client 2 reports an alarm corresponding to the service fault to an SCC board, so that the SCC board may actively turn off a laser on a side of the client 2, and trigger an optical fiber line auto switch protection equipment (optical fiber line auto switch protection equipment, OLP) to perform attenuation switching. Therefore, the client 1 and the client 2 are switched to communicate through the link 2, and normal execution of the client service is restored.

Currently, the CFP2-DCO module can report alarms to the SCC board through specific interruption pins in the CFP2-DCO module.

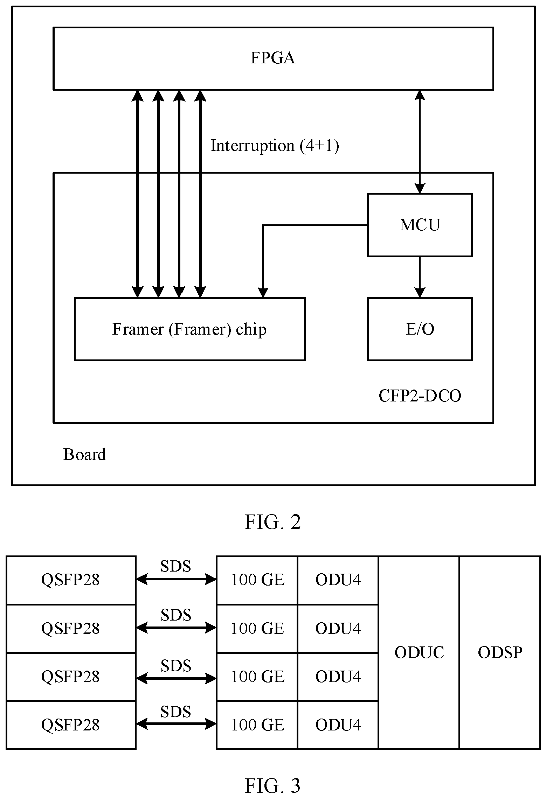

As shown in FIG. 2, the CFP2-DCO module includes a framer (Framer) chip, and the framer chip is configured to report fault alarms. The framer chip may provide a plurality of interruption reporting pins (16 or more, depending on a capability of the framer chip) for reporting fault alarms. When the CFP2-DCO module provides a transmission speed of 400 G, the CFP2-DCO module has a maximum of four 100 GE (gigabit ethernet, GE) client-side services. 1 GE=1 Gbps. On a line side, there is one ODUC4 channel. Due to limitation of 104 pin (pin) resources, the CFP2-DCO module selects only five interruption pins (as shown in FIG. 2) as interruption reporting pins to report fault alarms.

In this manner, the framer chip includes 104 pins in total, and all the five self-defined interruption pins are occupied. Therefore, scalability of the interruption reporting pin is poor. For example, when the CFP2-DCO module provides a transmission speed of 800 G, the CFP2-DCO module has a maximum of eight 100 GE client-side services. In this case, the interruption reporting pins are insufficient, and it is difficult to quickly report fault alarms in a timely manner.

In addition, a client-side service has multi-level mapping. For example, as shown in FIG. 3, in a transmission process, service data undergoes multi-level processing of modules such as a 100 GE, an optical data unit (optical data unit, ODU4), an ODUC, and an optical digital signal processor (optical digital signal processor, ODSP), and transmission of a quad small form-factor pluggable (quad small form-factor pluggable, QSFP28) or a SerDes bus. A fault may occur in a service data processing or transmission process of each module. However, due to limitation on a quantity of interruption reporting pins, only the fault alarms of client-side services and the ODUC can be reported in the preceding mode. For the fault alarms of the mapped ODU4, no more interruption pin resources can be reported.

In this manner, a quantity of fault alarms that can be reported by the CFP2-DCO module depends on an interruption pin resource provided by the framer chip. If the CFP2-DCO module reports fault alarms for all services that may be faulty, a resource limit of the interruption reporting pin is exceeded. However, the CFP2-DCO module can report a large quantity of fault alarms, and a maximum quantity of layers of multi-level mapping of client-side services is greater than the four layers shown in FIG. 3. Therefore, the reporting of fault alarms is affected by a quantity of interruption pins of the framer chip, and it is difficult to meet requirements for reporting complex alarm combinations and fast and timely reporting of fault alarm information.

In view of this, embodiments of this application provide a method for sending fault alarm information, to improve a speed of sending fault alarm information by an optical module, and implement fast and timely reporting of a fault alarm.

In some embodiments of this application, the optical module is an optical module having a frame (frame) processing function. For example, the optical module may be an optical module including a framer chip, for example, a coherent optical module.

In the following embodiments, an example in which the solutions provided in this application are used in the DCO module is used to describe the method provided in embodiments of this application. However, it should be understood that the method provided in embodiments of this application is not limited to being used in a coherent optical module, and may be further used in another optical module. This is not particularly limited in this embodiment of this application.

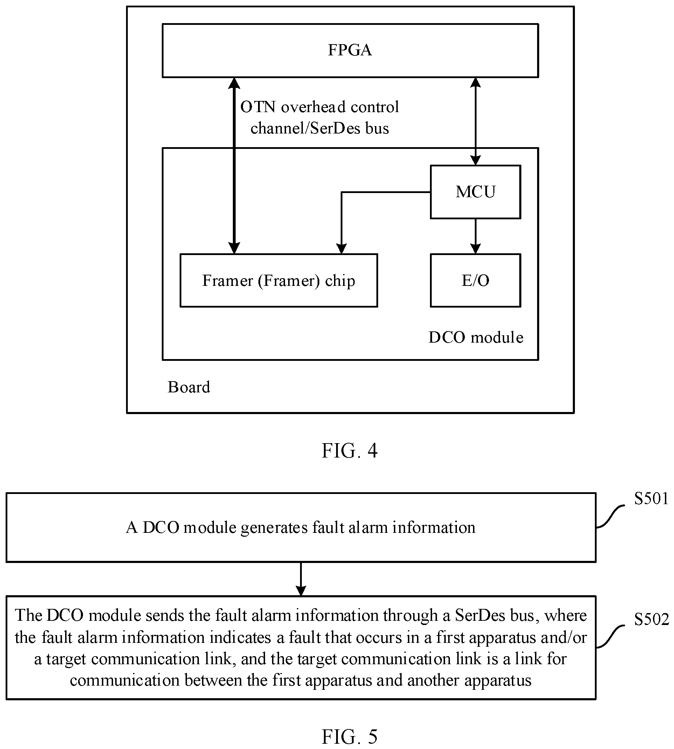

FIG. 4 is a schematic diagram of a system architecture of a board according to an embodiment of this application. As shown in FIG. 4, the board includes a DCO module and a field programmable gate array (field programmable gate array, FPGA). The DCO module may be configured to implement optical communication between the board and another component or apparatus. As a processing center of the board, the FPGA may be configured to implement digital communication between the board and another component or apparatus.

Optionally, the FPGA in the board may be replaced with another device or apparatus having a digital signal processing function. This is not specifically limited in this embodiment of this application.

The DCO module includes a framer chip, a microcontroller unit (microcontroller unit, MCU), and an electro-optical conversion (electro-optical conversion, E/O) unit. The framer chip is a chip that can perform data processing and that meets an optical communication standard or protocol (for example, a G.709 protocol and a G.798 protocol). The MCU is separately connected to and communicates with the FPGA, the framer chip, and the E/O unit. The MCU may be used to control the framer chip and the E/O unit. The E/O unit is mainly used to perform electro-optical conversion for signals. The framer chip may be connected to and communicate with the FPGA through its own pins or an OTN overhead control channel, namely, a SerDes bus. The framer chip may be configured to sense a fault that occurs in a DCO module, a board on which the DCO module is located, or an apparatus on which the board is located, and report corresponding fault alarm information to the FPGA, and then the FPGA reports the fault alarm information to an upper-layer module or another module that can perform corresponding processing on the fault.

In this embodiment of this application, after sensing that a service fault occurs, the DCO module may quickly report fault alarm information through an existing SerDes bus and in a software encoding manner. This can flexibly meet a requirement for fast reporting complex and massive fault alarm information while saving a layout area and pin resources of the DCO module.

In the DCI scenario, the board may quickly control OTN overhead resources through the FPGA. The transmission rate of an OTN overhead serial port on the SerDes bus ranges from 3.125 Gbps to 6.25 Gbps. The bandwidth usage of the OTN overhead control has a large margin. Therefore, bandwidth resources of the SerDes bus are relatively sufficient.

In addition, compared with the bandwidth resources of the SerDes bus, the bandwidth occupied by the fault alarm information reported by the DCO module is extremely low. For example, transmission of a 400 GE service shown in FIG. 3 is used as an example. In a service flow transmission path based on 4×100 GE, 4×ODU4, and ODUC4, fault alarm information of one 100 GE service occupies eight bytes. One ODU4 service is divided into nine layers (which are respectively a section monitoring (section monitoring, SM) layer, a path monitoring (path monitoring, PM) layer, tandem connection monitoring (tandem connection monitoring, TCM) 1 to 6, and an optical payload unit (optical payload unit, OPU)), and each layer occupies eight bytes. In this case, fault alarm information of one ODU4 service occupies 72 bytes, fault alarm information of one ODUC1 service and one ODU4 service both occupies 72 bytes, and the fault alarm information of one ODUC4 service and four ODUC1 services occupies the same bytes. Therefore, the fault alarm information involved in the service flow transmission path occupies 4 × 8 + 4 × 72 + 4 × 72 = 608 bytes in total. Based on the lowest transmission rate on the SerDes bus, namely, the bandwidth of 3.125 Gbps, the bandwidth usage for transmitting the fault alarm information is only 608 × 8/3.125 Gbps = 1E-6 (1 × 10⁻⁶). Therefore, impact of the fault alarm information transmission on the SerDes bus bandwidth is small and can be ignored.

The following describes, with reference to specific embodiments, the method for sending fault alarm information provided in this embodiment of this application.

The method for sending fault alarm information provided in this embodiment of this application may be used in a DCO module, and the DCO module may be deployed in an apparatus or a device that supports digital communication and optical communication. For example, the method may be used in the DCO module in the board shown in FIG. 4, and the first apparatus may be the board or the client device on which the DCO module shown in FIG. 4 is located. More specifically, the method for sending fault alarm information provided in this embodiment of this application may be used in a framer chip in the DCO module.

Refer to FIG. 5. An example in which the method provided in this embodiment of this application is used in a DCO module in a first apparatus is used. The method for sending fault alarm information provided in this embodiment of this application includes the following steps.

S501: ADCO module generates fault alarm information.

The DCO module may determine, based on received signal, whether the first apparatus where the DCO module is located or a link for communication between the first apparatus and another apparatus is faulty, and report fault alarm information. In some embodiments of this application, when sensing that a fault occurs in the first apparatus (including a fault that occurs in the DCO module and a fault that occurs in another module other than the DCO module in the first apparatus) or sensing that a fault occurs in a target communication link (a link for communication between the first apparatus and another apparatus), the DCO module first needs to locate the fault and generate corresponding fault alarm information.

In some embodiments of this application, when determining the fault that occurs in the first apparatus or the target communication link, the DCO module first obtains a target service classification tree. The target service classification tree indicates a service level of each target service in a plurality of target services, and an upper-level and lower-level association relationship between target services of different service levels. The plurality of target services are services carried by the first apparatus and the target communication link. In the target service classification tree, each target service has one upper-level service and/or at least one lower-level service.

The target service classification tree may be generated in advance by the DCO module based on the services carried by the first apparatus and the target communication link, and may be updated based on actual services carried by the first apparatus and the target communication link.

After obtaining the target service classification tree, the DCO module may query a faulty service level by level based on a service level relationship divided by the target service classification tree, determine, based on the faulty service, a fault that occurs in the first apparatus and/or the target communication link, and generate corresponding fault alarm information.

Specifically, the DCO module may first select, from the target service classification tree, a target service with a highest service level as a to-be-detected service, then sequentially detect, in a descending order of service levels, the to-be-detected service and all target services that have a lower-level association relationship with the to-be-detected service, and each time a faulty service is detected, save the faulty service, and stop detecting all target services that have a lower-level association relationship with the faulty service. After detection of all target services that have a lower-level association relationship with the to-be-detected service is completed, the DCO module may continue to select, from remaining services in the target service classification tree, a next target service with a highest service level as the to-be-detected service to continue detection until detection of a last target service with a highest service level is completed. After the detection is completed, the DCO module may obtain all faulty services in the first apparatus and the target communication link.

For example, the DCO module shown in FIG. 4 is used as an example. A framer chip in the DCO module may perform software-related control by using a software development kit (software development kit, SDK). Initially, the SDK of the framer chip may generate a target service classification tree based on services in the DCO module. In the target service classification tree, services in the DCO module may be classified into three levels: a level-1 service, a level-2 service, and a level-3 service. In this case, interruptions that occur in the corresponding services respectively belong to level-1 service interruption, level-2 service interruption, and level-3 service interruption. The level-1 service is an SDK service, namely, a service executed inside the SDK. When a fault occurs in the SDK itself, the service executed by the SDK is interrupted, and the SDK can sense the fault first. Therefore, the SDK service is the highest-level service, and the interruption of the SDK service is the highest-level interruption. The SDK service is a root node of the target service classification tree and is a convergence point of all faulty services in the DCO module. When querying the faulty service, the framer chip first checks whether the highest-level service interruption exists. That is, the framer chip checks whether the SDK service is interrupted to determine whether a fault occurs in the SDK. The level-2 service may include, for example, an XM layer (including an SM layer, a TCM layer, and a PM layer) service, a reserved for future international standardisation (reserved for future international standardisation, RES) service, and a payload type (paload type, PT) related service in the ODUC and the ODU4. The level-3 service may be a subservice obtained by further dividing each level-2 service, or may be a service associated with the level-2 service.

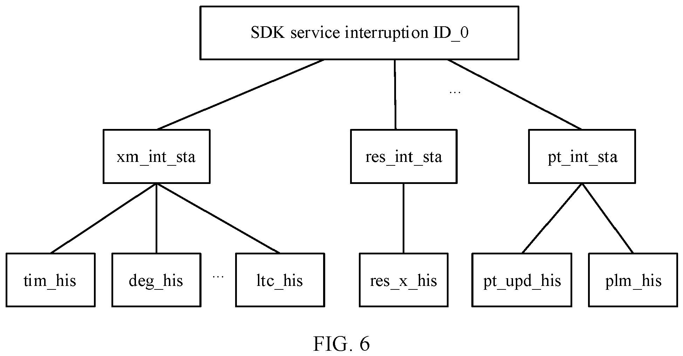

For example, FIG. 6 is a schematic diagram of a service interruption alarm tree according to an embodiment of this application. As shown in FIG. 6, the service interruption alarm tree corresponds to the target service classification tree, and indicates an interruption level when each service in the target service classification tree is interrupted. The level-1 service interruption is the interruption of the SDK service and may be identified as ID_0. The level-2 service interruption includes interruption of the XM layer service (which may be identified as xm_int_sta), interruption of the RES service (which may be identified as res_int_sta, indicating interruption of an RES overhead field in the OTN overhead), and interruption of the PT-related service (which may be identified as pt_int_sta, indicating interruption of a PT overhead byte). The interruption of the XM layer service may be further divided into a plurality of level-3 service interruptions, for example, a historical alarm interruption (which may be identified as tim_his) of a TIM layer, a historical alarm interruption (which may be identified as deg_his) of the signal degrade DEG, and a historical alarm interruption (which may be identified as ltc_his) of the loss of tandem connection, (loss of tandem connection, LTC) shown in FIG. 6. The interruption of the RES section service may be further divided into a plurality of level-3 service interruptions. For example, an RES alarm interruption shown in FIG. 6 may be identified as res_x_his, where the OTN overhead has 11 RES bytes in total, and a value of x is 1 to 11, indicating a specific RES byte in the 11 RES bytes. The interruption of the PT-related services may be further divided into a plurality of level-3 service interruptions, for example, a historical alarm interruption (which may be identified as pt_upd_his) of PT update and a historical alarm interruption (which may be identified as plm_his) of PT mismatch shown in FIG. 6.

After determining the occurred fault, the DCO module may generate fault alarm information based on the fault, where a type of the fault alarm information is the same as a type of the determined fault.

When the faulty service is the foregoing target service, the fault alarm information includes at least one piece of fault indication information, where the at least one piece of fault indication information indicates the target service or indicates whether the target service is faulty.

In some embodiments of this application, the fault alarm information may further include layer indication information, and the layer indication information indicates a mapping layer to which a faulty service indicated by the at least one piece of fault indication information belongs.

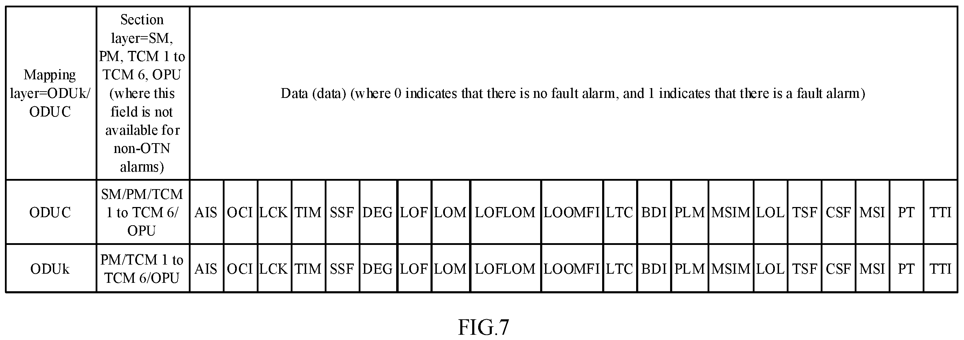

For example, FIG. 7 is a schematic diagram of composition of a data frame of fault alarm information according to an embodiment of this application. For example, the fault indication information indicates the fault at the mapping layer of the ODUC and the ODU4 shown in FIG. 3. As shown in FIG. 7, the data frame of the fault alarm information may include a mapping layer field, a section layer field, and a fault indication information field. The mapping layer field indicates a mapping layer to which a faulty service belongs, and a value of the field is an ODUC identifier or an ODU4 identifier. The section layer field indicates a section layer to which a faulty service belongs, and a value of the field may be an SM layer, a PM layer, TCM 1 to TCM 6, an OPU layer, or the like. The section layer is further division of the mapping layer. The fault indication information field indicates whether a specific service is faulty. For example, the fault indication information field may include a plurality of pieces of field information such as an AIS field to a trail trace identifier (trail trace identifier, TTI) field shown in FIG. 7. Different values of the field respectively indicate whether a corresponding fault occurs. For example, when a value of an ASI field is 1, it may indicate that a fault occurs in a service corresponding to the field; and when a value of the AIS field is 0, it indicates that no fault occurs in a service corresponding to the field. An indication manner of another field is the same as an indication manner of the ASI field, and details are not described herein again.

It should be noted that FIG. 7 shows only a data frame format of an OTN overhead signal corresponding to a network layer in the OTN. In different network layers, each network layer has its own OTN overhead signals. The OTN overhead signal of each network layer may be used to detect signal quality of the network layer.

S502: The DCO module sends the fault alarm information through a SerDes bus, where the fault alarm information indicates a fault that occurs in the first apparatus and/or a target communication link, and the target communication link is a link for communication between the first apparatus and another apparatus.

After generating the fault alarm information, the DCO module sends the fault alarm information through the SerDes bus. As an optional implementation, the DCO module may directly send the data frame of the fault alarm information on the SerDes bus. As another optional implementation, the DCO module may carry the fault alarm information in an OTN overhead signal for sending, and the DCO module may send the OTN overhead signal carrying the fault alarm information through the SerDes bus, to send the fault alarm information.

The OTN overhead signal is used to monitor, manage, and maintain a signal transmitted in a communication process, to ensure quality of the transmitted signal. In this embodiment of this application, the data frame of the OTN overhead signal may be formed in any one of the following manners:

Manner 1: The OTN overhead signal includes the fault alarm information and overhead information.

The overhead information is used to monitor a service signal of a service carried by the first apparatus and/or the target communication link.

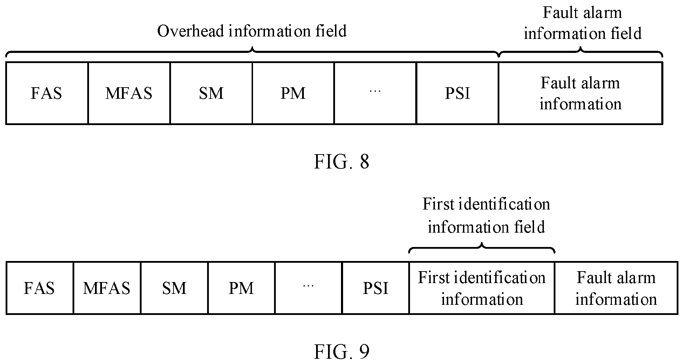

For example, FIG. 8 is a schematic diagram of a data frame of an OTN signal according to an embodiment of this application. As shown in FIG. 8, the data frame of the OTN overhead signal includes a fault alarm information field and an overhead information field. The overhead information field is used to carry the overhead information, and the fault alarm information field is used to carry the fault alarm information. The overhead information includes content of an OTN overhead defined in a related standard or protocol (such as a G.709 protocol or a G.798 protocol), for example, a plurality of signals such as a frame alignment signal (frame alignment signal, FAS), a multiframe alignment signal (multiframe alignment signal, MFAS), an SM, a PM, and a payload structure identifier (payload structure identifier, PSI) shown in FIG. 8.

For example, when the DCO module sends the fault alarm information to the FPGA, the FPGA may identify the overhead information and the fault alarm information in the OTN overhead signal respectively, to determine, based on the identified fault alarm information, a fault alarm reported by the DCO module, and report the fault alarm to an upper-level module or another related module.

Manner 2: The OTN overhead signal includes the fault alarm information, the overhead information, and first identification information. The first identification information identifies the fault alarm information.

Based on the data frame of the OTN signal provided in the foregoing Manner 1, the data frame of the OTN overhead signal in this manner may further include a first identification information field. The first identification information field is used to carry the first identification information.

For example, FIG. 9 is a schematic diagram of a data frame of another OTN signal according to an embodiment of this application. As shown in FIG. 9, the first identification information is located before the fault alarm information in the data frame, and the first identification information indicates that information after the first identification information is the fault alarm information. After the DCO module sends the OTN data frame to the FPGA, the FPGA may quickly locate and determine the fault alarm information based on the first identification information. This further improves a speed of processing a fault alarm by the FPGA.

Manner 3: The OTN overhead signal includes the fault alarm information, the overhead information, the first identification information, and second identification information.

Based on the data frame of the OTN signal provided in the manner 2, the data frame of the OTN overhead signal in this manner may further include a second identification information field. The second identification information field is used to carry the second identification information.

In this manner, a quantity of second identification information fields included in the data frame may be the same as a quantity of information types included in the overhead information, and second identification information carried in each second identification information field may identify one type of overhead in the overhead information.

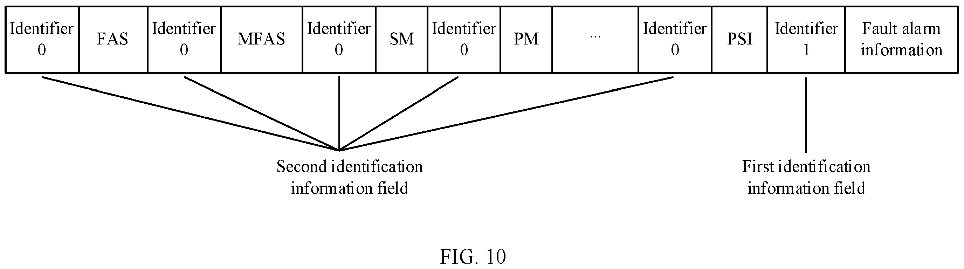

For example, FIG. 10 is a schematic diagram of a data frame of still another OTN signal according to an embodiment of this application. As shown in FIG. 10, in a plurality of signals from an FAS signal to a TTI signal, a field of the second identification information exists before a field of each signal to identify that the signal is the overhead information, and the first identification information exists before a field of the fault alarm information to identify the fault alarm information. Therefore, the overhead information and the fault alarm information in the data frame can be further clearly distinguished.

In the foregoing manner, a value of the first identification information is different from a value of the second identification information, to distinguish the fault alarm information and the overhead information. For example, as shown in FIG. 10, a value of the first identification information may be an identifier 1, and a value of the second identification information may be an identifier 0.

It should be noted that, in the foregoing examples, an example in which the fault alarm information field in the data frame is located after the overhead information field is used for description. However, during actual implementation, location of the fault alarm information field in the data frame is not limited thereto. The fault alarm information field may also be located in another location in the data frame, for example, may be located before the overhead information field.

In some embodiments of this application, after generating the data frame of the OTN signal, and before sending the data frame, the DCO module further needs to allocate a bandwidth resource that is on the SerDes bus and that is used to transmit the data frame. The bandwidth resource allocated for transmitting the data frame is greater than or equal to a bandwidth resource required for transmitting the OTN overhead signal. After the fault alarm information is added to an OTN signal, the bandwidth resource required for transmitting the OTN increases accordingly. Therefore, compared with a bandwidth resource allocated during OTN signal transmission in an existing solution, in the solution provided in this embodiment of this application, a bandwidth resource that is on the SerDes bus and that is used to transmit the OTN signal needs to be added and allocated, and the added and allocated bandwidth resource needs to meet a requirement for reporting the fault alarm information.

In some embodiments of this application, in addition to indicating the fault that occurs in the first apparatus and/or the target communication link, the fault indication information sent by the DCO module may further indicate a fault that occurs in a second apparatus communicating with the first apparatus. In this case, the fault indication information sent by the DCO module may be fault indication information received from the second apparatus. After receiving the fault indication information from the second apparatus, the DCO module sends the fault indication information through the SerDes bus.

For example, when the method provided in this embodiment of this application is used in the system shown in FIG. 1, the DCO modules of the client 1 and the client 2 may detect, by using the method provided in this embodiment of this application, a fault that occurs in the apparatuses in which the DCO modules are located or the communication links used by the DCO modules. When the first apparatus is the client 2 shown in FIG. 1 and the second apparatus is the client 1 shown in FIG. 1, the DCO module in the first apparatus may detect, by using the method provided in the foregoing embodiment of this application, the fault that occurs in the first apparatus and/or the target communication link (which may be the communication link between the first apparatus and the second apparatus), and after generating corresponding fault alarm information, send the fault alarm information through the SerDes bus. In addition, the DCO module in the second apparatus may also detect a fault that occurs in the second apparatus and/or the target communication link, and generate corresponding fault alarm information. After generating the fault alarm information, the DCO module of the second apparatus may send the fault alarm information to the DCO module of the first apparatus, and the DCO module of the first apparatus may forward the fault alarm information through the SerDes bus.

In the foregoing embodiment, the SerDes bus is an OTN overhead control channel of the DCO module, and a transmission rate and transmission bandwidth of the SerDes bus are both large, and a corresponding capacity of information that can be borne is also large. In addition, during actual application, bandwidth occupied by the SerDes bus usually has a large margin. Therefore, the DCO module sends the fault alarm information through an existing SerDes bus, so that a large bandwidth margin of the SerDes bus can be used to quickly send a large quantity of fault alarm information. This improves a speed and efficiency of the DCO module in sending a fault alarm. In addition, the solution in the foregoing embodiment does not affect a hardware distribution integration level of the DCO module, and is more feasible.

The following describes, with reference to specific examples, the method for sending fault alarm information provided in embodiments of this application.

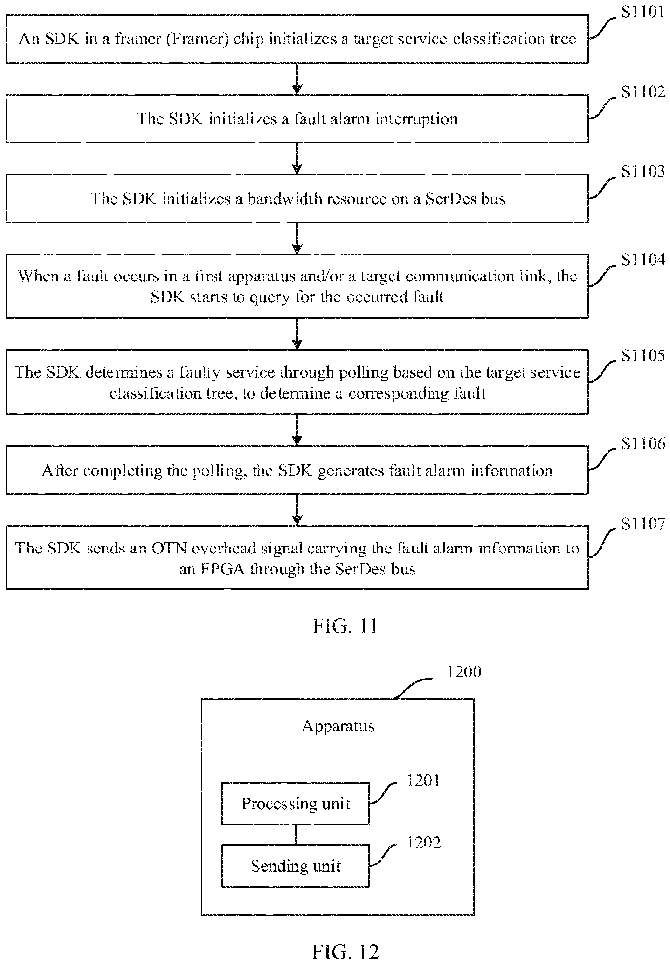

FIG. 11 is a schematic flowchart of a method for sending fault alarm information according to an embodiment of this application. For example, the method is used in the board shown in FIG. 4. As shown in FIG. 11, the procedure includes the following steps.

S1101: An SDK in a framer chip initializes a target service classification tree.

In this step, the SDK may determine, based on services carried by the first apparatus and the target communication link, service levels corresponding to these services, and establish an upper-level and lower-level association relationship between the services, to generate an initial target service classification tree.

S1102: The SDK initializes a fault alarm interruption.

S1103: The SDK initializes a bandwidth resource on the SerDes bus.

S1104: When a fault occurs in the first apparatus and/or the target communication link, the SDK starts to query the occurred fault.

S1105: The SDK determines a faulty service through polling based on the target service classification tree, to determine a corresponding fault.

For an implementation used when the SDK determines, through polling and based on the target service classification tree, the faulty service, refer to the description in the foregoing embodiment. Details are not described herein again.

S1106: After completing the polling, the SDK generates the fault alarm information.

S1107: The SDK sends the OTN overhead signal carrying the fault alarm information to the FPGA through the SerDes bus.

For the fault alarm information and the data frame format of the OTN overhead signal, refer to the description in the foregoing embodiment. Details are not described herein again.

After receiving the fault alarm information from the SDK, the FPGA reports the fault alarm information to a related module. For example, the FPGA may report the fault alarm information to an SCC board.

Based on the foregoing embodiment, the DCO module may encode the fault alarm information by using a software encoding mode of the SDK in the framer chip, and send the fault alarm information by using idle physical resources of the existing SerDes bus. In this way, the fault alarm information is fast reported, and pin resources and layout area of the DCO module are saved. In addition, this solution is flexible in implementation, and a fault alarm of any one or more mapping layers can be fast reported.

Based on the foregoing embodiments and a same concept, an embodiment of this application further provides an apparatus. The apparatus is used in an optical module, and the optical module is located in a first apparatus. As shown in FIG. 12, the apparatus 1200 may include:
a processing unit 1201, configured to generate fault alarm information; and a sending unit 1202, configured to send the fault alarm information through a SerDes bus, where the fault alarm information indicates a fault that occurs in the first apparatus and/or a target communication link, and the target communication link is a link for communication between the first apparatus and another apparatus.

In a possible design, when sending the fault alarm information through the SerDes bus, the sending unit 1202 is specifically configured to send, through the SerDes bus, an optical transport network OTN overhead signal that carries the fault alarm information.

In a possible design, the OTN overhead signal further includes: overhead information and first identification information; or the overhead information, the first identification information, and second identification information. The overhead information is used to monitor a service signal of a service carried by the first apparatus and/or the target communication link, the first identification information identifies the fault alarm information, and the second identification information identifies the overhead information.

In a possible design, when generating the fault alarm information, the processing unit 1201 is specifically configured to determine the fault that occurs in the first apparatus and/or the target communication link, and generate the fault alarm information based on the determined fault, where a type of the fault alarm information is the same as a type of the determined fault.

In a possible design, when determining the fault that occurs in the first apparatus and/or the target communication link, the processing unit 1201 is specifically configured to: obtain a target service classification tree, where the target service classification tree indicates a service level of each target service in a plurality of target services and an upper-level and lower-level association relationship between target services of different service levels, the plurality of target services are services carried by the first apparatus and the target communication link, and in the target service classification tree, each target service has one upper-level service and/or at least one lower-level service; detect a faulty service based on the target service classification tree; and determine, based on the faulty service, the fault that occurs in the first apparatus and/or the target communication link.

In a possible design, when detecting the faulty service based on the target service classification tree, the processing unit 1201 is specifically configured to: select, from the target service classification tree, a target service with a highest service level as a to-be-detected service; sequentially detect, in descending order of service levels, the to-be-detected service and all target services that have a lower-level association relationship with the to-be-detected service; each time a faulty service is detected, save the faulty service, and stop detecting all target services that have a lower-level association relationship with the faulty service; and after detection of all the target services that have the lower-level association relationship with the to-be-detected service is completed, select, from the target service classification tree, a next target service with a highest service level as a to-be-detected service to continue detection until detection of a last target service with a highest service level is completed.

In a possible design, when a faulty service is a target service, the fault alarm information includes at least one piece of fault indication information. The at least one piece of fault indication information indicates the target service.

In an implementation, the processing unit 1201 may be a processor or a controller, for example, a general-purpose central processing unit (central processing unit, CPU), a general-purpose processor, a digital signal processor (digital signal processing, DSP), an application-specific integrated circuit (application specific integrated circuits, ASIC), a field programmable gate array (field programmable gate array, FPGA), another programmable logic device, a transistor logic device, a hardware component, or any combination thereof. The processor may implement or execute various example logical blocks, modules, or the like described with reference to content disclosed in this application. Alternatively, the processor may be a combination of processors implementing a computing function, for example, a combination of one or more microprocessors, or a combination of a DSP and a microprocessor.

The sending unit 1202 may be an interface circuit of the apparatus 1200, and is configured to send a signal or data to another apparatus. When the apparatus 1200 is implemented in a manner of a chip, the sending unit 1202 may be an interface circuit configured by the chip to send data to another chip or apparatus. Optionally, the sending unit 1202 may further integrate a function of a receiving unit. That is, the sending unit 1202 may further receive a signal or data from another apparatus.

In embodiments of this application, division into the units is an example, is merely logical function division, and may be other division during actual implementation. In addition, functional units in embodiments of this application may be integrated into one processor, or each of the units may exist alone physically, or two or more units may be integrated into one unit. The integrated unit may be implemented in a form of hardware, or may be implemented in a form of a software functional unit.

Only one or more of the units in FIG. 12 may be implemented by software, hardware, firmware, or a combination thereof. The software or firmware includes but is not limited to computer program instructions or code, and may be executed by a hardware processor. The hardware includes but is not limited to various integrated circuits, for example, a central processing unit (CPU), a digital signal processor (DSP), a field programmable gate array (FPGA), or an application-specific integrated circuit (ASIC).

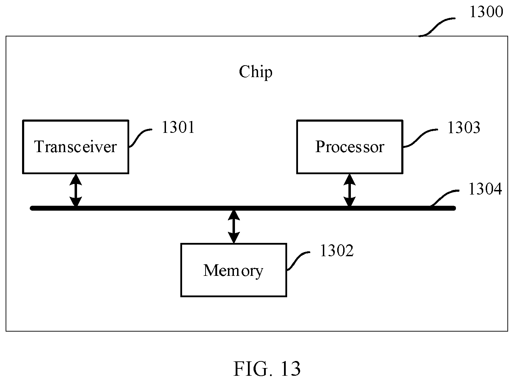

Based on the foregoing embodiments and a same concept, an embodiment of this application further provides a chip. The chip is configured to implement the method for sending fault alarm information provided in embodiments of this application. As shown in FIG. 13, the chip 1300 includes a transceiver 1301, a memory 1302, and at least one processor 1303.

The processor 1303 and the transceiver 1301 are coupled to each other. In this embodiment of this application, the coupling is an indirect coupling or a communication connection between apparatuses, units, or modules, may be in an electrical form, a mechanical form, or another form, and is used for information exchange between the apparatuses, units, or modules.

Specifically, the transceiver 1301 may be a circuit, a bus, a communication interface, or any other module that may be configured to perform information exchange, and may be configured to receive or send information.

Optionally, the memory 1302 is coupled to the transceiver 1301 and the processor 1303, and is configured to store program instructions.

The processor 1303 is configured to invoke the program instructions stored in the memory 1302, so that the chip 1300 performs the method provided in embodiments of this application.

The transceiver 1301 is configured to receive and send a radio frequency signal, and is coupled to a receiver and a transmitter of the chip 1300. The transceiver 1301 communicates with a communication network and another communication device by using a radio frequency signal or an optical signal, for example, an ethernet (Ethernet), a radio access network (Radio Access Technology, RAN), a wireless local area network (Wireless Local Area Networks, WLAN), an optical transport network, or the like. During specific implementation, a communication protocol supported by the transceiver 1301 may include an optical transport network protocol, a wireless communication protocol, and the like. The wireless communication network protocol may be, for example, a Wi-Fi protocol, 2G/3G, long term evolution (Long Term Evolution, LTE), 5G new radio (New Radio, NR), or the like.

During specific implementation, the memory 1302 may include a high-speed random access memory, and may also include a non-volatile memory, such as one or more disk storage devices, a flash memory device, or another non-volatile solid-state storage device. The memory 1302 may store an operating system (briefly referred to as a system below), for example, an embedded operating system such as Android, iOS, Windows, Linux, or the like. The memory 1302 may be configured to store an implementation program in this embodiment of this application. The memory 1302 may further store a network communication program. The network communication program may be used to communicate with one or more additional devices, one or more user equipments, or one or more network devices.

The processor 1303 may be a general-purpose central processing unit (Central Processing Unit, CPU), a microprocessor, an application-specific integrated circuit (Application-Specific Integrated Circuit, ASIC), or one or more integrated circuits configured to control execution of programs of the solutions of this application.

In some embodiments of this application, the transceiver 1301, the memory 1302, and the processor 1303 may be connected to each other through a communication line 1304. The communication line 1304 may be a peripheral component interconnect (Peripheral Component Interconnect, PCI for short) bus, an extended industry standard architecture (Extended Industry Standard Architecture, EISA for short) bus, or the like. The communication line 1304 may be classified into an address bus, a data bus, a control bus, and the like. For ease of representation, only one bold line represents the bus in FIG. 13, but this does not mean that there is only one bus or only one type of bus.

It should be noted that FIG. 13 is merely an implementation of this embodiment of this application. During actual application, the chip 1300 may further include more or fewer components. This is not limited herein.

Based on the foregoing embodiments and a same concept, an embodiment of this application further provides an electronic device. The electronic device includes the chip in the foregoing embodiments.

Based on the foregoing embodiments and a same concept, an embodiment of this application further provides an electronic device. The electronic device includes an optical module, and the optical module includes the chip in the foregoing embodiments.

Based on the foregoing embodiments and a same concept, an embodiment of this application further provides a computer-readable storage medium. The computer-readable storage medium stores a computer program. When the computer program is run on a computer, the computer is enabled to perform the method provided in the foregoing embodiments.

Based on the foregoing embodiments and a same concept, an embodiment of this application further provides a computer program product. The computer program product includes a computer program or instructions. When the computer program or the instructions are run on a computer, the computer is enabled to perform the method provided in the foregoing embodiments.

All or some of the methods in embodiments of this application may be implemented by using software, hardware, firmware, or any combination thereof. When software is used to implement the methods, all or some of the methods may be implemented in a form of a computer program product. The computer program product includes one or more computer instructions. When computer program instructions are loaded and executed on a computer, the procedure or functions according to embodiments of the present invention are all or partially generated. The computer may be a general-purpose computer, a dedicated computer, a computer network, a network device, user equipment, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL for short)) or wireless (for example, infrared, radio, or microwave) manner. The computer-readable storage medium may be any usable medium accessible by the computer, or a data storage device integrating one or more usable media, such as a server or a data center. The usable medium may be a magnetic medium (for example, a floppy disk, a hard disk, or a magnetic tape), an optical medium (for example, a digital video disc (digital video disc, DVD for short)), a semiconductor medium (for example, an SSD), or the like.

It is clearly that, a person skilled in the art can make various modifications and variations to this application without departing from the scope of this application. This application is intended to cover these modifications and variations of this application provided that they fall within the scope of protection defined by the following claims and their equivalent technologies.

## Claims

1. A method for sending fault alarm information, used in an optical module, wherein the optical module is located in a first apparatus, and the method comprises:
generating fault alarm information; and
sending the fault alarm information through a serializer/deserializer SerDes bus, wherein the fault alarm information indicates a fault that occurs in the first apparatus and/or a target communication link, and the target communication link is a link for communication between the first apparatus and another apparatus.

2. The method according to claim 1, wherein the sending the fault alarm information through a SerDes bus comprises:
sending an optical transport network OTN overhead signal that carries the fault alarm information through the SerDes bus.

3. The method according to claim 2, wherein the OTN overhead signal further comprises:
overhead information and first identification information; or
the overhead information, the first identification information, and second identification information, wherein
the overhead information is used to monitor a service signal of a service carried by the first apparatus and/or the target communication link, the first identification information identifies the fault alarm information, and the second identification information identifies the overhead information.

4. The method according to any one of claims 1 to 3, wherein the generating fault alarm information comprises:
determining the fault that occurs in the first apparatus and/or the target communication link; and
generating the fault alarm information based on the determined fault, wherein a type of the fault alarm information is the same as a type of the determined fault.

5. The method according to claim 4, wherein the determining the fault that occurs in the first apparatus and/or the target communication link comprises:
obtaining a target service classification tree, wherein the target service classification tree indicates a service level of each target service in a plurality of target services, and an upper-level and lower-level association relationship between target services of different service levels, and the plurality of target services are services carried by the first apparatus and the target communication link, and in the target service classification tree, each target service has one upper-level service and/or at least one lower-level service;
detecting a faulty service based on the target service classification tree; and
determining, based on the faulty service, the fault that occurs in the first apparatus and/or the target communication link.

6. The method according to claim 5, wherein the detecting a faulty service based on the target service classification tree comprises:
selecting, from the target service classification tree, a target service with a highest service level as a to-be-detected service; sequentially detecting, in a descending order of service levels, the to-be-detected service and all target services that have a lower-level association relationship with the to-be-detected service; and each time a faulty service is detected, saving the faulty service, and stopping detecting all target services that have a lower-level association relationship with the faulty service; and
after detection of all the target services that have the lower-level association relationship with the to-be-detected service is completed, selecting, from the target service classification tree, a next target service with a highest service level as a to-be-detected service to continue detection until detection of a last target service with a highest service level is completed.

7. The method according to claim 5 or 6, wherein when the faulty service is a target service, the fault alarm information comprises at least one piece of fault indication information, and the at least one piece of fault indication information indicates the target service.

8. An apparatus, wherein the apparatus is applied to an optical module, the optical module is located in a first apparatus, and the apparatus comprises:
a processing unit, configured to generate fault alarm information; and
a sending unit, configured to send the fault alarm information through a SerDes bus, wherein the fault alarm information indicates a fault that occurs in the first apparatus and/or a target communication link, and the target communication link is a link for communication between the first apparatus and another apparatus.

9. The apparatus according to claim 8, wherein when sending the fault alarm information through the SerDes bus, the sending unit is specifically configured to:
send an optical transport network OTN overhead signal that carries the fault alarm information through the SerDes bus.

10. The apparatus according to claim 9, wherein the OTN overhead signal further comprises:
overhead information and first identification information; or
the overhead information, the first identification information, and second identification information, wherein
the overhead information is used to monitor a service signal of a service carried by the first apparatus and/or the target communication link, the first identification information identifies the fault alarm information, and the second identification information identifies the overhead information.

11. The apparatus according to any one of claims 8 to 10, wherein when generating the fault alarm information, the processing unit is specifically configured to:
determine the fault that occurs in the first apparatus and/or the target communication link; and
generate the fault alarm information based on the determined fault, wherein a type of the fault alarm information is the same as a type of the determined fault.

12. The apparatus according to claim 11, wherein when determining the fault that occurs in the first apparatus and/or the target communication link, the processing unit is specifically configured to:
obtain a target service classification tree, wherein the target service classification tree indicates a service level of each target service in a plurality of target services, and an upper-level and lower-level association relationship between target services of different service levels, and the plurality of target services are services carried by the first apparatus and the target communication link, and in the target service classification tree, each target service has one upper-level service and/or at least one lower-level service;
detect a faulty service based on the target service classification tree; and
determine, based on the faulty service, the fault that occurs in the first apparatus and/or the target communication link.

13. The apparatus according to claim 12, wherein when detecting the faulty service based on the target service classification tree, the processing unit is specifically configured to:
select, from the target service classification tree, a target service with a highest service level as a to-be-detected service; sequentially detect, in a descending order of service levels, the to-be-detected service and all target services that have a lower-level association relationship with the to-be-detected service; and each time a faulty service is detected, save the faulty service, and stop detecting all target services that have a lower-level association relationship with the faulty service; and
after detection of all target services that have a lower-level association relationship with the to-be-detected service is completed, select, from the target service classification tree, a next target service with a highest service level as the to-be-detected service to continue detection until detection of a last target service with a highest service level is completed.

14. The apparatus according to claim 12 or 13, wherein when the faulty service is a target service, the fault alarm information comprises at least one piece of fault indication information, and the at least one piece of fault indication information indicates the target service.

15. A chip, comprising a transceiver, a memory, and a processor, wherein
the transceiver is configured to receive a signal from an apparatus other than the chip, and transmit the signal to the processor, or send a signal from the processor to an apparatus other than the chip;
the memory is configured to store a program; and
the processor is configured to execute the program stored in the memory, to perform the method according to any one of claims 1 to 7.

16. An electronic device, wherein the electronic device comprises the chip according to claim 15.

17. An electronic device, wherein the electronic device comprises an optical module, and the optical module comprises the chip according to claim 15.

18. A computer-readable storage medium, wherein the computer-readable storage medium stores a computer program, and when the computer program is run on a computer, the computer is enabled to perform the method according to any one of claims 1 to 7.

19. A computer program product, wherein the computer program product comprises a computer program or instructions, and when the computer program or the instructions is/are run on a computer, the computer is enabled to perform the method according to any one of claims 1 to 7.
